(19) Europäisches Patentamt / European Patent Office / Office européen des brevets

(11) **EP 2 093 100 B1**

(12) **EUROPEAN PATENT SPECIFICATION**

(45) Date of publication and mention
of the grant of the patent:
**26.01.2011 Bulletin 2011/04**

(51) Int Cl.:
**B60L 15/20** (2006.01)      **B62K 3/00** (2006.01)
**B62K 17/00** (2006.01)      **G05D 1/08** (2006.01)

(21) Application number: **07850312.5**

(22) Date of filing: **03.12.2007**

(86) International application number:
**PCT/JP2007/073738**

(87) International publication number:
**WO 2009/072215 (11.06.2009 Gazette 2009/24)**

(54) **TRAVEL GEAR AND ITS CONTROLLING METHOD**

FAHRGETRIEBE UND STEUERUNGSVERFAHREN DAFÜR

ENGRENAGE DE ROULEMENT ET SON PROCÉDÉ DE COMMANDE

(84) Designated Contracting States:
**DE FR GB**

(43) Date of publication of application:
**26.08.2009 Bulletin 2009/35**

(73) Proprietor: **Toyota Jidosha Kabushiki Kaisha
Toyota-shi, Aichi 471-8571 (JP)**

(72) Inventor: **ISHII, Shinji
Tokyo 108-0075 (JP)**

(74) Representative: **Smith, Samuel Leonard
J.A. Kemp & Co.
14 South Square
Gray's Inn
London WC1R 5JJ (GB)**

(56) References cited:
**EP-A- 1 529 556      EP-A- 1 788 469
JP-A- 5 268 704      JP-A- 9 135 504
JP-A- 2007 106 265      JP-T- 2003 508 285
US-A1- 2006 260 857      US-A1- 2007 084 662**

## Description

### Technical Field

The present invention relates to a traveling apparatus suitable for use in a vehicle in which, for example, two wheels each of which is independently driven are arranged in parallel and control is carried out such that the vehicle travels while being maintained stably in the front-and-back direction between the two wheels, and a method of controlling the same. In particular, it relates to an apparatus that does not make any accidental movement when it is parked in a slope or the like.

### Background Art

In a traveling apparatus in the related art, the balance of a support platform with respect to a ground-contacting module is maintained by the motion of the ground-contacting module in response to the inclination of the support platform (for example, see Patent document 1).

Furthermore, there is another type of traveling apparatus in which posture control and traveling control are carried out by controlling and driving coaxially arranged left-and-right driving wheels in response to an output of a posture detection sensor in order to maintain the balance of the traveling apparatus in the front-and-back direction (for example, see Patent document 2).

However, neither of the above-mentioned two techniques can maintain the traveling apparatus at a standstill in an inclined road surface, and the traveling apparatus must increase the velocity in proportion to the angle of the inclination. Therefore, the traveling apparatus needs to be maintained at a standstill by the manual operation of the user in an inclined road surface. Furthermore, there is another problem that the traveling apparatus cannot maintain its posture autonomously in a slope when no person is riding on the traveling apparatus.

[Patent Document 1]
Japanese Patent Translation Publication No. 2004-500271
[Patent Document 2]
Japanese Unexamined Patent Application Publication No. 2004-074814

### Disclosure of the Invention

#### Problems to be solved by the Invention

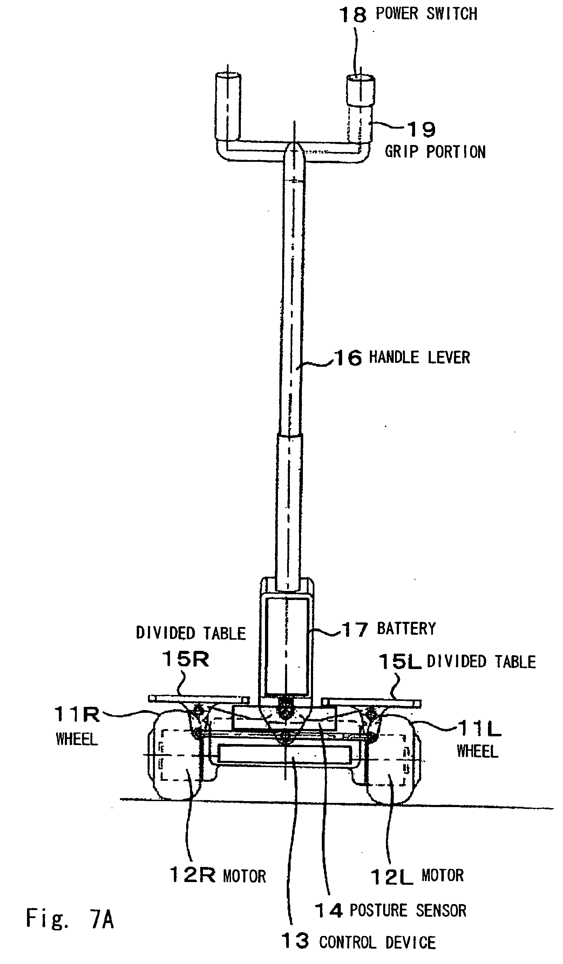

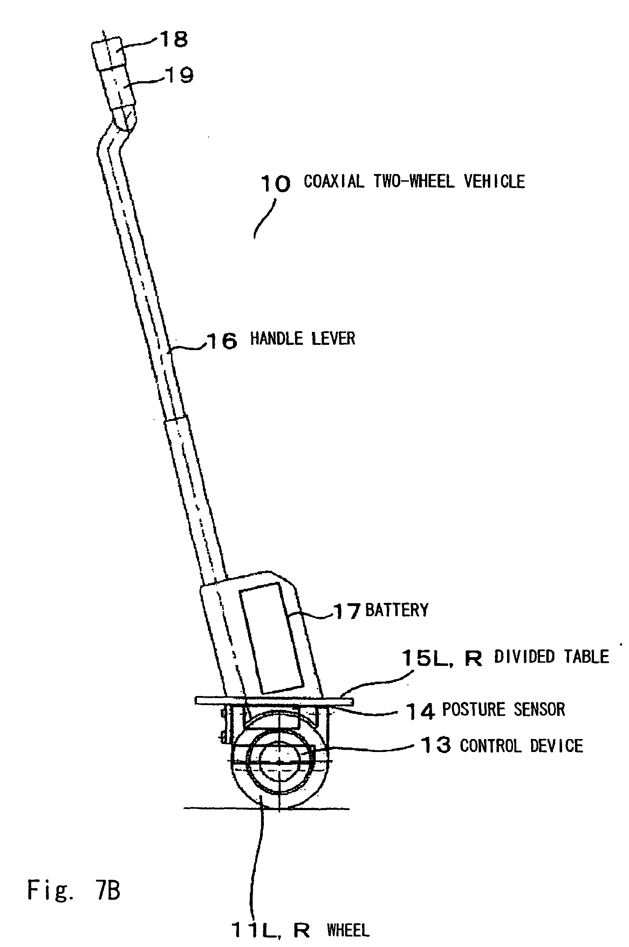

For example, the applicant of the present application previously proposed a traveling apparatus like the one described below as a vehicle traveling by two wheels with a person riding thereon (Japanese Patent Application No. 2005-117365). Firstly, one embodiment of the coaxial two-wheel vehicle proposed by the applicant of the present application is explained hereinafter with reference to Figs. 7A and 7B.

As shown in Figs. 7A and 7B, the coaxial two-wheel vehicle 10 that was previously proposed by the applicant has two wheels 11L and 11R arranged in parallel, and these two wheels 11L and 11R are independently driven by their respective motors 12L and 12R. Furthermore, the driving of these motors 12L and 12R is controlled by a control device 13. Furthermore, a posture sensor 14 composed of a gyroscope or the like is connected to the control device 13, and the control device 13 calculates drive torque (motor torque) necessary to control the motors 12L and 12R in accordance with a detection signal from the posture sensor 14.

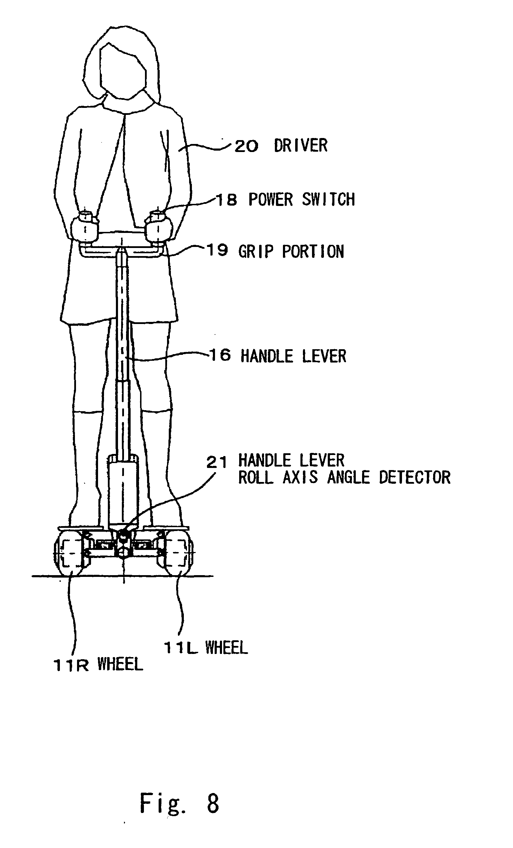

Meanwhile, divided tables 15L and 15R are provided in the vicinity of the wheels 11L and 11R as one example of a getting-on portion on which a driver gets on. These divided tables 15L and 15R are maintained at specified postures with respect to each other by a link mechanism (not shown). Furthermore, a handle lever 16 is provided on and extends upward from a portion between the divided tables 15L and 15R, and a battery 17, which is used as the drive power supply for the whole portion of the apparatus, and a roll-axis angle detector 21 (see Fig. 8) are provided in the base part of that portion. Furthermore, grip portions 19 having a power switch 18 are provided on the upper portion of the handle lever 16.

Then, as shown in Fig. 8, the driver 20 stands up on the divided tables 15L and 15R by putting each of his/her feet on their respective divided tables 15L and 15R, grips the grip portions 19 on the upper portion of the handle lever 16, and manipulates the power switch 18 and the roll-axis angle of the handle lever 16. This manipulation is detected by the roll-axis angle detector 21. Furthermore, the position of the center-of-mass of the driver on the divided tables 15L and 15R is detected by an embedded pressure sensor (not shown). Furthermore, the detection signal from the posture sensor 14 shown in Fig. 7 is supplied to the control device 13 so that the traveling of the coaxial two-wheel vehicle 10 is controlled.

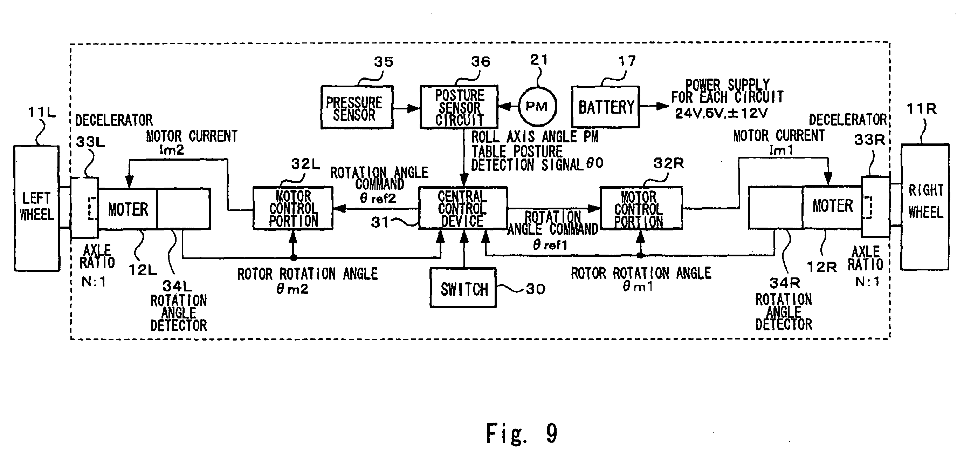

Furthermore, Fig. 9 shows a block diagram of the structure of a control system. That is, Fig. 9 shows the structure of the control system including the above-mentioned control device 13 and its peripheral circuits as a block diagram.

In Fig. 9, manipulation signals from various switches 30 are supplied to a central control device 31, and the central control device 31 generates left and right rotation angle command signals θref1 and θref2. These rotation angle command signals θref1 and θref2 are supplied to their respective motor control devices 32L and 32R. Furthermore, motor currents Im1 and Im2 generated in the motor control devices 32L and 32R are supplied to their respective motor 12L and 12R. Then, the rotations of these motor 12L and 12R are transferred to the wheels 11L and 11R through speed reducers 33L and 33R.

Meanwhile, the rotation angles of the motor 12L and 12R are detected by their respective detectors 34L and 34R. The detected rotation angle signals θm1 and θm2 are supplied to their respective motor control devices 32L and 32R as well as to the central control device 31, so that feedback control is carried out for the rotation angle command signal θref1 and θref2. Furthermore, detection signals from the pressure sensor 35 embedded in the divided tables 15L and 15R and from the roll-axis angle detector (PM) 21 are supplied to a circuit 36 including the posture sensor 14, and a roll-axis angle detection signal PM and generated table posture detection signals θ0 (including θroll, θpitch, θyaw, ωroll, ωpitch, and ωyaw) are supplied to the control device 13.

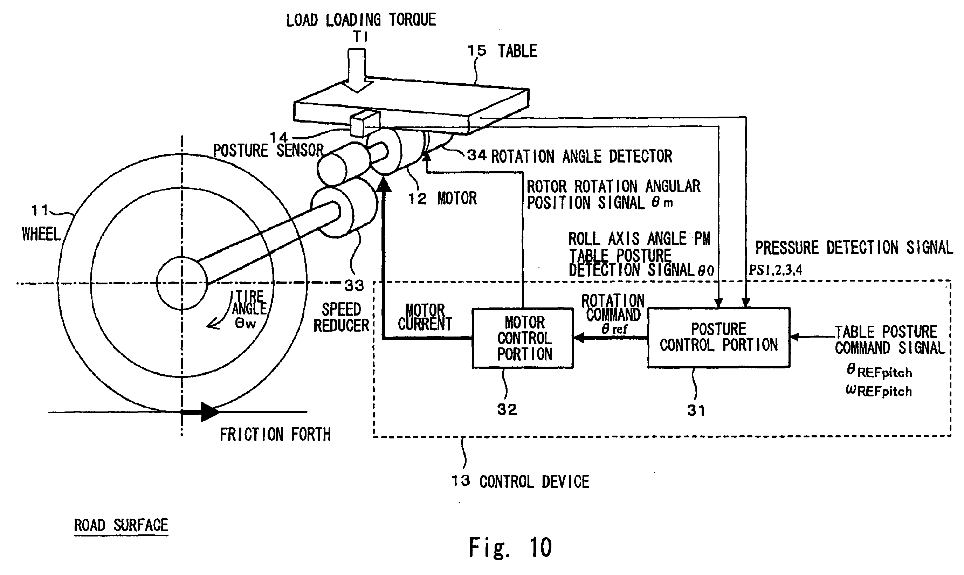

Furthermore, Fig. 10 is a schematic diagram of an illustrative structure of a control device for a one-wheel model. Note that the sensor will be shared between two tables in an actual two-wheel vehicle. Furthermore, control for the motor, which is linked to the wheel in the model shown in the figure, is carried out independently for each wheel by separate control devices.

In Fig. 10, pressure detection signals PS1, 2, 3, and 4 from a pressure sensor (not shown) embedded in a table 15 and a table posture detection signal θ0 from a posture sensor 14 composed of a gyro sensor and an acceleration sensor are supplied to a posture control portion 31 in a control device 13. Then, a rotation command θref is calculated by using these detection signals PS1 - 4 and θ0, and external table posture command signals θREFpitch, θREFyaw, ωREFpitch, and ωREFyaw originated from a passenger or the like, and the calculated rotation command θref is supplied to a motor control portion 32.

Furthermore, a motor 12 is connected to a wheel 11 through a speed reducer 33, and the motor 12 is equipped with a rotation angle detector 34. Then, a rotor rotation angular position signal θm from the rotation angle detector 34 is supplied to the motor control portion 32 in the control device 13. In this way, feedback control is carried out for the drive current to the motor 12 that is generated in accordance with the above-mentioned rotation command θref, and the driving of the wheel 11 is stabilized. In this manner, the wheel 11 is driven in a stable manner, and its driving is controlled by the detection signals PS1 - 4 from the pressure sensor (not shown), the detection signals θ0 from the posture sensor, and the like.

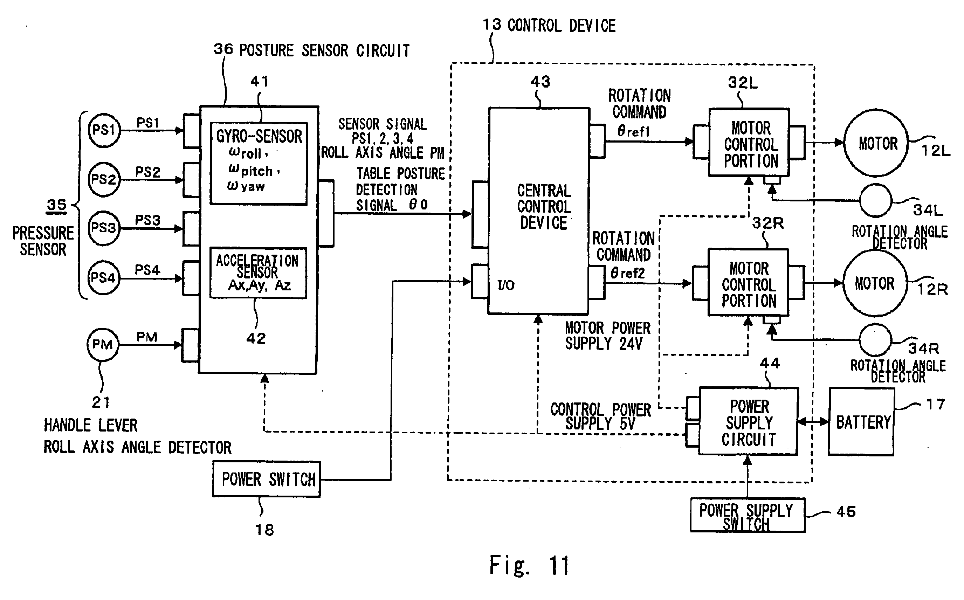

Furthermore, Fig. 11 shows the mutual connection relation of the system. In Fig. 11, the detection signals PS1 - 4 from a pressure sensor 35 and the roll-axis angle detection signal PM from a roll-axis angle detector (potentiometer) 21 are supplied to a posture sensor circuit 36. The posture sensor circuit 36 contains within it a gyro sensor 41 and an acceleration sensor 42. Therefore, the detection signals PS1 - 4, the roll-axis angle detection signal PM, and the table posture detection signal θ0 are taken out from the posture sensor circuit 36.

These detection signals PS1 - 4, the roll-axis angle detection signal PM, and the table posture detection signal θ0 are supplied to a central control device 43 in the control device 13. Furthermore, a manipulation signal from the power switch 18 is also supplied to the central control device 43. In this way, rotation commands θref1 and θref2 for left and right wheels are calculated in the central control device 43, and they are supplied to the motor control portions 32L and 32R. Furthermore, a signal from each of the rotation detectors 34L and 34R is supplied to their respective motor control portions 32L and 32R so that the motors 12L and 12R are driven.

Furthermore, electrical power from the battery 17 is supplied to a power supply circuit 44. From this power supply circuit 44, electrical power for 24 V motors, for example, is supplied to the motor control portions 32L and 32R, and electrical power for 5V control circuits, for example, is supplied to the posture sensor circuit 36 and the central control device 43. Note that the power supply circuit 44 is equipped with a power supply switch 45, so that electrical power supply to each portion is controlled. In this manner, the motors 12L and 12R are driven, and these motors 12L and 12R drive the wheels 11L and 11R, so that the driving of the coaxial two-wheel vehicle 10 is carried out.

The object of the present invention is a two-wheel vehicle having characteristic features that a motor is mounted into each independent wheel as shown in Fig. 7 and a control structure to maintain the balance by detecting the posture of the main body is adopted, wherein: the two-wheel vehicle has a traveling mechanism and a control device to carry out the traveling control by controlling the motor torque; a gyro sensor and an acceleration sensor is embedded in the base; and the vehicle is controlled such that the main body carries out forward movement, backward movement, and rotational traveling while maintaining base pitch angle and yaw angle at a stable posture determined by the control device by providing rotational torque to the wheels.

However, a vehicle having a characteristic feature that it has a degree of freedom in roll-axis rotation by a parallel link structure as shown in Fig. 7, or a vehicle that is also adaptable to one-wheel vehicles or vehicles having three or more wheels cannot be maintained at a standstill on an inclined road surface by the control method in which the vehicle is driven by using the principle of the inverted pendulum. Furthermore, the techniques described in the Patent documents 1 and 2 also cannot maintain the vehicle at a standstill on an inclined road surface, and the vehicle must increase the velocity in proportion to the angle of the inclination. Therefore, the vehicle needs to be maintained at a standstill by the manual operation of the user in an inclined road surface. In addition, there is another problem that the vehicle cannot maintain its posture autonomously in a slope when no person is riding on the vehicle.

The present invention has been made in view of such problems, and the problem to be solved by the present invention is that apparatuses in the related art cannot maintain the vehicles at a standstill on an inclined road surface. Furthermore, the techniques described in the Patent documents 1 and 2 also cannot maintain the vehicle at a standstill on an inclined road surface, and the vehicle must increase the velocity in proportion to the angle of the inclination. Therefore, the vehicle needs to be maintained at a standstill by the manual operation of the user in an inclined road surface. In addition, the vehicle has not been able to maintain its posture autonomously in a slope when no person is riding on the vehicle.

EP 1 788 469 A on which claim 1 and claim 3 is based, respectively, describes a control method of a traveling dolly, having wheels driven by motors which are drive means, a body supported by the wheels, and a control computer as a control means commanding control command value to the motors, a centroid of the body positioning above a rotation axis of the wheels. The control computer estimates external force moment, which is moment of inertia around the rotation axis of the wheels generated by external force applied on the body. The tilt angle of the body, which makes gravity moment around the rotation axis of the centroid of the body balances with the external force moment, is set as target body tilt angle. Based on the target body tilt angle, torque command value for the motors is calculated.

US 2007/0084662 A describes a traveling apparatus which is provided with two wheels parallel each of which is driven independently, being controlled to be stable in an anteroposterior direction between the two wheels and traveling. The traveling apparatus includes a mechanism estimating an inclination of a plane where a pitch angular velocity sensor is horizontally installed with respect to a horizontal plane by using a sensor measuring a tilt of a vehicle body in a roll axis direction and a mechanism calculating a correct pitch angle by obtaining a yaw rate mixed in the pitch angular velocity sensor based on the estimated inclination and a turn velocity of the vehicle body and by canceling the yaw rate mixed.

US 2006/0260857 A describes a coaxial two-wheel vehicle with which a rider stably travels without the upper body being swayed left and right in a riding state of the center of gravity being positioned high. The coaxial two-wheel vehicle includes: a step plate for a driver to ride; a vehicle body that supports the step plate to be capable of changing a posture in a roll direction of rotating around a roll axis as the center, when a traveling direction is made the roll axis; a pair of wheels disposed on both sides on the same axis in the direction orthogonal to the traveling direction of the vehicle body and rotatably supported by the vehicle body; a pair of wheel drive means to drive and rotate the pair of wheels independently; and a handle for directly changing a posture of the step plate or indirectly changing the posture through the vehicle body.

EP 1 529 556 A describes a traveling apparatus and a method for controlling thereof, in which an abrupt turn to make a rider fall down is prevented and stable traveling is obtained without fail. At a step [1] whether or not a turn operation is performed by means of a barycentric position of the rider, and the barycentric position is detected at a step [2] from a load sensor. Further, a turn velocity command is generated at a step [3]. Then, the barycentric position to which the centrifugal force is added is detected at a step [4], and it is judged at a step [5] whether or not the barycentric position is close to a tire. When it is close to the tire (Yes), processing to reduce the turn velocity is performed at a step [6].; Hereupon, such computation is performed that a sensor signal $\omega$yaw from a gyroscopic sensor is set to $\omega$yaw $\leftarrow$ $\omega$yaw $\times$ G$\omega$ (G$\omega$ is a value that changes in inverse proportion to the strength of the centrifugal force). When the barycentric position is not close to the tire (No), it is set to $\omega$yaw$\leftarrow\omega$yaw at a step [7]. Furthermore, a wheel rotational velocity command is supplied at a step [8] to set tire velocity of right and left wheels to $\omega$yaw, and a turn of a vehicle is performed at a step [9].

**Means for solving the Problems**

According to the present invention, there is provided a traveling apparatus and a method of controlling a traveling apparatus as defined in appended claims 1 and 3.

Therefore, in the present invention, control in which the control system for a servomotor has both of the control systems of control using an inverted pendulum and motor position control, and which can operate consistent with the braking by a brake lever has been invented. In this manner, it can autonomously maintain the posture and remain at a standstill regardless of the inclination of a road surface. Therefore, the present invention provides a traveling apparatus capable of being maintained at a standstill even on an inclined road surface, and a method of controlling the same.

**Advantageous Effects of the Invention**

The invention in Claim 1 enables to carry out control in which the control system for a servomotor has both of the control systems of control using an inverted pendulum and motor position control, and which can operate consistent with the braking by a brake lever, and therefore it can autonomously maintain the posture and remain at a standstill regardless of the inclination of a road surface.

Furthermore, the invention in Claims 1 and 2 enables to carry out control such that the motor torque $\tau 0$ is balanced with the rotation torque $\tau 1$ of the wheel, so that it can autonomously maintain the posture and remain at a standstill regardless of the inclination of a road surface.

Furthermore, the invention in Claim 3 enables to realize a control method in which the control system for a servomotor has both of the control systems of control using an inverted pendulum and motor position control, and which can operate consistent with the braking by a brake lever, and therefore it can autonomously maintain the posture and remain at a standstill regardless of the inclination of a road surface. Furthermore, the invention in Claims 7 and 8 enables to realize a control method capable of carrying out control such that the motor torque $\tau 0$ is balanced with the rotation torque $\tau 1$ of the wheel, so that it can autonomously maintain the posture and remain at a standstill regardless of the inclination of a road surface.

As described above, apparatuses in the related art cannot maintain vehicles at a standstill on an inclined road surface. Furthermore, the techniques described in the Patent documents 1 and 2 also cannot maintain the vehicle at a standstill on an inclined road surface, and the vehicle must increase the velocity in proportion to the angle of the inclination. Therefore, the vehicle needs to be maintained at a standstill by the manual operation of the user in an inclined road surface. In addition, the vehicle has not been able to maintain its posture autonomously in a slope when no person is riding on the vehicle. The present invention can provide means capable of easily solving these problems.

**Brief Description of the Drawings**

Fig. 1 is a block diagram of one embodiment of a structure for standstill posture control to which a traveling apparatus and a control method in accordance with the present invention is applied;
Fig. 2 is a figure for illustrating it;
Fig. 3 is a figure for illustrating it;
Fig. 4 is a figure for illustrating it;
Fig. 5A is a figure for illustrating it;
Fig. 5B is a figure for illustrating it;
Fig. 6 is a flowchart for illustrating the operation of it;
Fig. 7A is a structural diagram showing one embodiment of a traveling apparatus to which the present invention is applied;
Fig. 7B is a structural diagram showing one embodiment of a traveling apparatus to which the present invention is applied;
Fig. 8 is a figure for illustrating it;
Fig. 9 is a figure for illustrating it;
Fig. 10 is a figure for illustrating it; and
Fig. 11 is a figure for illustrating it;

**Description of Reference Numerals**

| | |
|---|---|
| 100 | posture control calculation portion; |
| 101 | setting portion for stable posture angle command value $\theta$ REFpitch0; |
| 102 | setting portion for posture angular velocity command |
| value | $\omega$REFpitch; |
| 103, 106 | adder; |
| 104, 107 | subtracter; |
| 105, 108 | controller; |
| 109 | amplifier having a gain Kamp; |
| 110 | motor constant (Km); |
| 114 | system; |

119      calculation unit; and

120      switch.

**Best Modes for carrying out the Invention**

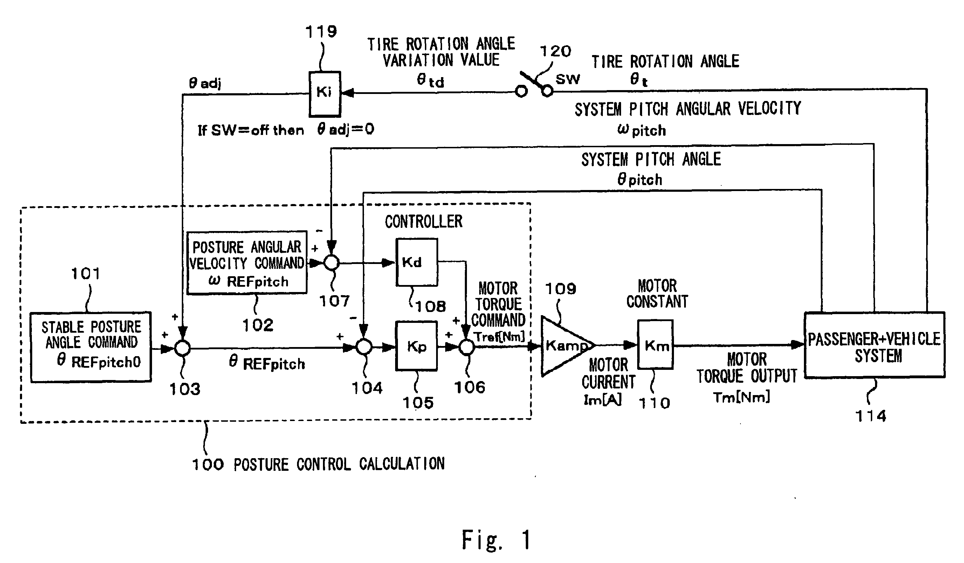

The present invention is explained hereinafter with reference to the drawings. Fig. 1 is a block diagram of one embodiment of a structure for standstill posture control to which a traveling apparatus and a control method in accordance with the present invention is applied.

In Fig. 1, a posture control calculation portion 100 has, for example, a setting portion for stable posture angle command value θREFpitch0 101 and a setting portion for posture angular velocity command value ωREFpitch 102. Then, the value θREFpitch0 from the setting portion 101 is supplied to a controller 105 through an adder 103 and a subtracter 104. Then, after multiplied by a coefficient Kp, it is supplied to an adder 106. Furthermore, the value ωREFpitch from the setting portion 102 is supplied to a controller 108 through a subtracter 107. Then, after multiplied by a coefficient Kd, it is supplied to the adder 106. In this manner, a motor torque command Tref [Nm] is taken out from the adder 106.

Furthermore, the motor torque command Tref[Nm] is supplied to an amplifier 109 having a gain Kamp and converted into a motor current Im[A], and then supplied to a motor. The motor is represented as a motor constant (Km) 110. In this manner, a motor torque output Tm [Nm] is taken out from the motor constant 110. The motor torque output Tm[Nm] is inputted to a system 114 composed of a passenger and a vehicle.

A table posture θ0 is detected in the system 114. Among the table posture θ0, a pitch velocity ωpitch is supplied to the subtracter 107 and subtracted from the value ωREFpitch, and a pitch angle θpitch is supplied to the subtracter 104 and subtracted from the value θREFpitch.

Furthermore, a tire rotation angle θt is also detected from the system 114.

The tire rotation angle θt is supplied to a calculation unit 119, and multiplied by Ki to generate a value θadj. The value θadj is supplied to the adder 103 through a switch 120, and added to the stable posture angle command value θREFpitch0 from the setting portion 101.

Accordingly, posture dynamics to maintain the balance in angular momentum, floor pressure, and the ZMP (Zero Moment Point) of two-wheel vehicle structure is explained hereinafter in regard to the structure for the above-described standstill posture control.

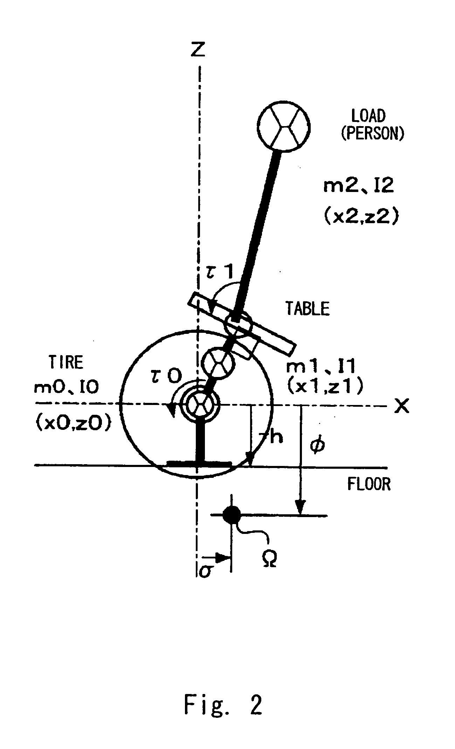

In the figure showing each point where force is applied as shown in Fig. 2, angular momentum on the defined point $\Omega$ ($\sigma$, $\varphi$) of the ith link can be calculated from the following Equation 1 where the center-of-mass coordinates of each link are represented by (xi, zi).

[Equation 1]

$$ I_i * \omega_i + m_i * x_i (\dot{\phi} - z_i) - m_i * z_i (\dot{\sigma} - x_i) $$

Furthermore, the moment by the inertial force of all of the links is expressed by the following equation.

[Equation 2]

$$ \sum_{I=0}^{n} ( I_i * \dot{\omega}_i + m_i * x_i (\ddot{\phi} - z_i) - m_i * z_i (\ddot{\sigma} - x_i) ) $$

Next, the moment by the gravity of all of the links is expressed by the following equation.

[Equation 3]

$$\sum_{I=0}^{n} m_i \, (\sigma - x_i) \, g$$

Therefor, the moment on $\Omega$ is calculated by the sum of these moments, i.e., by the following Equation 4.

[Equation 4]

$$M\Omega = \sum_{I=0}^{n} I_i * \dot{\omega}_i + \sum_{i=0}^{n} m_i \, (x_i \, (\ddot{\phi} - z_i) - z_i \, (\ddot{\sigma} - x_i)) + \sum_{i=0}^{n} m_i \, (\sigma - x_i) \, g$$

Furthermore, if the moment by the gravity of the wheel having a weight m0 is excluded, the moment becomes the moment on the wheel axis. Letting Ma stand for this moment, the equation becomes the following equation.

[Equation 5]

$$Ma = \sum_{I=0}^{n} I_i * \dot{\omega}_i + \sum_{i=0}^{n} m_i \, (z_i * \ddot{x}_i - x_i * \ddot{z}_i) - \sum_{i=0}^{n} m_i * x_i * g$$

Furthermore, the moment $M\Omega$ on the above-mentioned $\Omega$ is expressed in the following equation by using Ma. That is, since X0 = 0, it is expressed by the following Equation 6.

[Equation 6]

$$M\Omega = Ma - \sum_{I=0}^{n} m_i \, (\ddot{z}_i - g) \, \sigma + \sum_{i=0}^{n} m_i * x_i * \ddot{\phi}$$

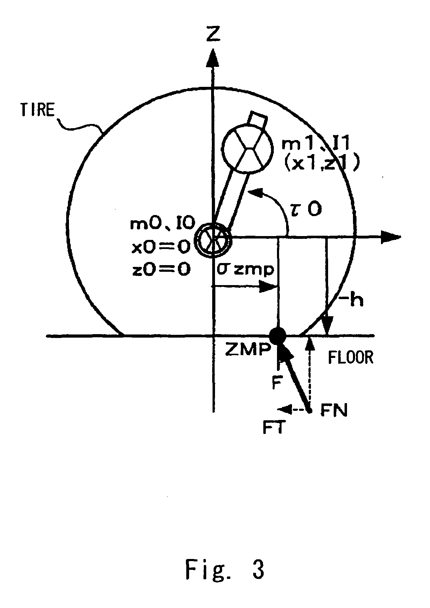

Meanwhile, as shown in Fig. 3, the ZMP is defined to be the point on the floor surface where the moment $M\Omega$ is zero. Letting h and ($\sigma$zmp, -h) stand for the height of the wheel axis and the coordinates of the ZMP respectively, the following equation is obtained by substituting them into the Equation 4.

[Equation 7]

$$0 = \sum_{i=0}^{n} I_i * \dot{\omega}_i + \sum_{i=0}^{n} m_i \left( -x_i (h + z_i) - \ddot{z}_i (\sigma_{zmp} - x_i) \right) + \sum_{i=0}^{n} m_i (\sigma_{zmp} - x_i) g$$

By solving this equation for σzmp, the ZMP can be expressed by link positions, acceleration, and gravity. Furthermore, the following Equation 8 is obtained by substituting the coordinates of the ZMP into the Equation 6.

[Equation 8]

$$0 = Ma - \sum_{i=0}^{n} m_i (\ddot{z}_i - g) \sigma_{zmp} - \sum_{i=0}^{n} m_i * \ddot{x}_i * h$$

At this point, the Equation 8 is an equation expressing the balance between the moments on the wheel axis. That is, F is the vector of the floor reactive forth and the rotational friction forth, FN is the floor reactive forth, and FT is the rotational friction forth. The reactive forth is expressed as a single point where the entire reactive forth acts on in the figure, although in reality the reactive forth is distributed over the bottom of the tire. The point of action expressed in such a manner is the ZMP.

By expressing the balance between the moments on the wheel axis point by using this equation, the following equation is obtained.

[Equation 9]

$$FN * \sigma zmp + FT * h + \tau 0 = 0$$

Then, by substituting the following equation into this equation, the Equation 9 becomes the same equation as the Equation 8.

[Equation 10]

$$\tau 0 = Ma, \quad FN = -\sum_{i=0}^{n} m_i (\ddot{z}_i - g), \quad FT = -\sum_{i=0}^{n} m_i * \ddot{x}_i$$

Meanwhile, only necessary condition to stabilize the posture above the axle is to have the Equation 9 satisfying σzmp=0. Therefore, if the equation τ0=-FT*h is satisfied, the posture is stably maintained. Accordingly, the posture can be stabilized by controlling the state variables of the Equation 11 so as to satisfy the condition τ0=FT=0.

[Equation11]

$$(\dot{X}i,\ \ddot{X}i,\ \dddot{X}i) = (0,\ 0,\ 0)$$

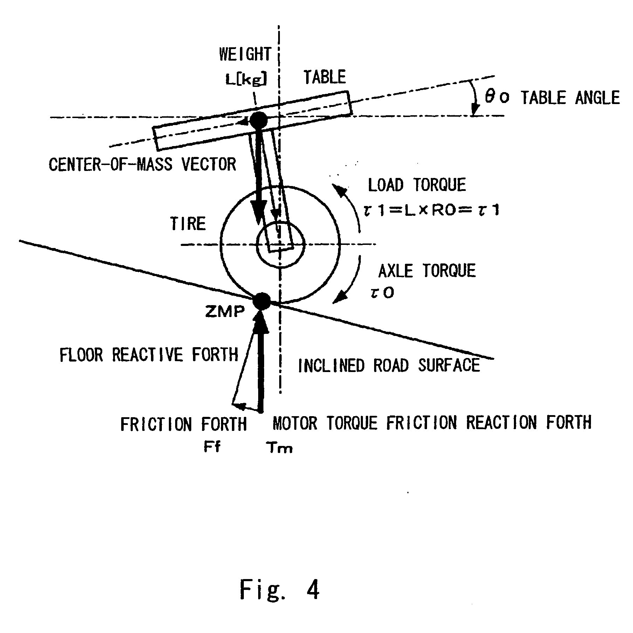

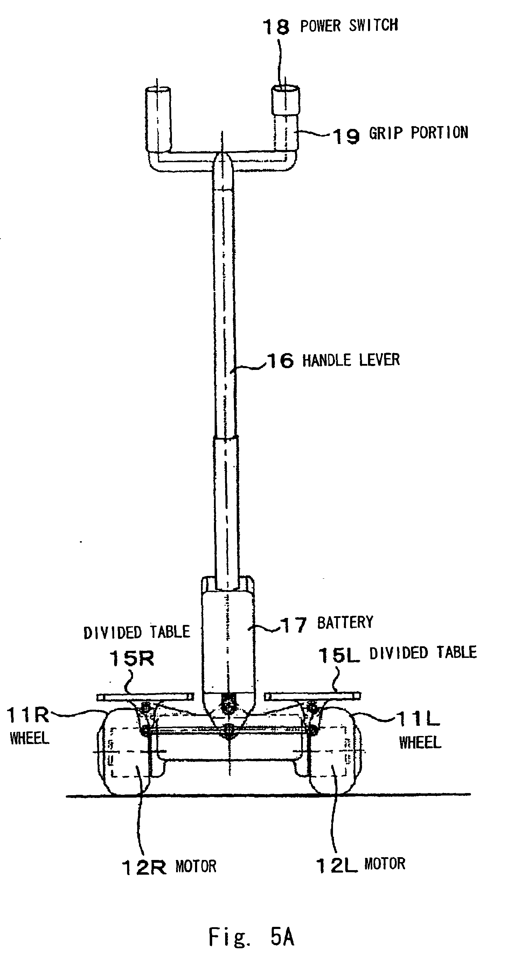

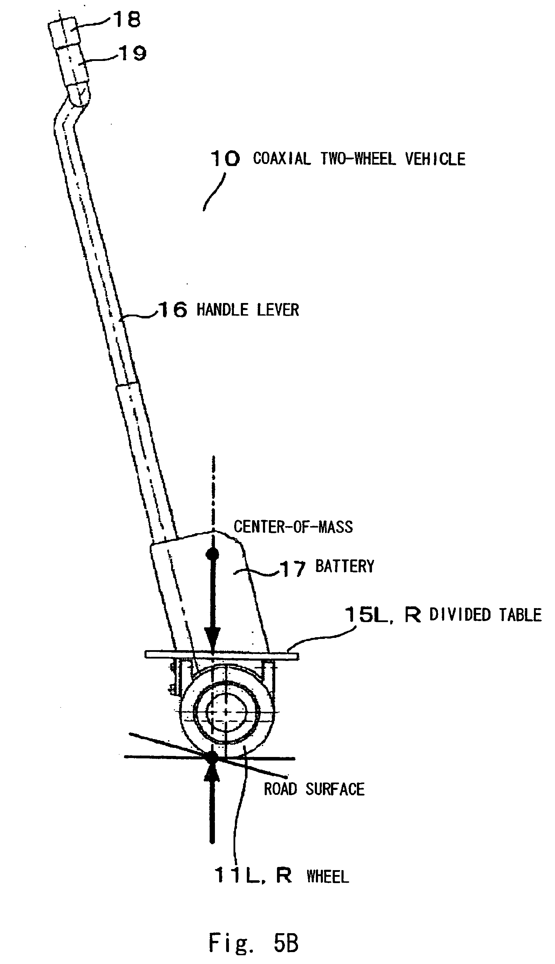

With the principle explained above, the ground touching point of the tire is located at the point shown in Figs. 4 and 5 in an inclined road surface shown in the figures. To maintain the posture in a ground touching state like this, only necessary requirement is that the ZMP should have such a relation that the ZMP becomes the ground touching point of the tire. At this point, when it is inclined as shown in Figs. 4 and 5, the posture can be maintained by adjusting the ZMP so as to become identical to the road surface touching point by motor torque τ0. Such motor drive torque is generated by the structure for the standstill posture control shown in Fig. 1.

That is, when the ground touching point of the tire is on the vector of the center-of-mass on an inclined road surface as shown in Fig. 4, this system can maintain the standstill posture. Fig. 5 shows a case where the system can keep the balance of an actual vehicle and maintain the standstill state on an inclined road surface by controlling the position of the center-of-mass to the ground touching point of the tire by using the control shown in Fig. 1.

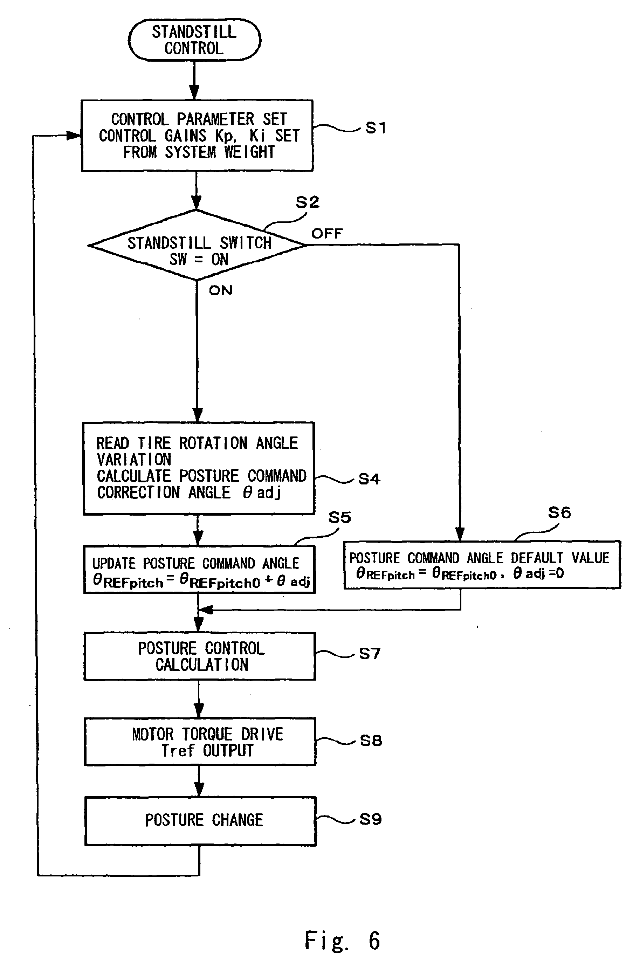

Furthermore, Fig. 6 shows a flowchart of the operation to carry out standstill control by using the control shown in Fig. 1. That is, in the standstill control shown in Fig. 6, control parameters are first established at step S1. At this step, control gains Kp, Ki are established depending on the system weight. Next, it determines whether a standstill switch SW120 is ON or not at step S2. That is, it determines whether the standstill control is selected or not.

When the standstill switch SW is ON at the step S2, it reads the variation in the rotation angle of the tire that is varied from the time when the switch is turned on, and calculates the posture command correction angle θadj at step S4. Furthermore, it updates the posture command angle to the value expressed by the formula θREFpitch=θREFpitch0+θadj at step S5.

Furthermore, when the standstill switch SW is OFF at the step S2, the posture command correction angle θadj is set to zero at step S6. Therefore, it becomes θREFpitch=θREFpitch0. Furthermore, it performs posture control calculation at step S7, and outputs a motor torque command Tref at step S8. Then, the posture is changed at step S9, and it returns to the step S1.

Accordingly, the control in which the control system for the servomotor has both of the control systems of control using an inverted pendulum and motor position control, and which can operate consistent with the braking by a brake lever is invented in the above-mentioned embodiment. In this manner, it can autonomously maintain the posture and remain at a standstill regardless of the inclination of a road surface. Therefore, the present invention can provide a traveling apparatus capable of being maintained at a standstill even on an inclined road surface, and a method of controlling the same.

Note that the present invention is not limited to the embodiment explained in the above description, and various modifications can be made to the embodiments without departing from the scope of the present invention as defined in the appended claims.

**Claims**

**1.** A traveling apparatus to travel while controlling the driving of wheels of the traveling apparatus comprising:

control means (100) for generating a motor torque command signal (Tm) by calculating motor torque necessary to drive the wheels;
detection means (114) for detecting variation in the rotation angle of a wheel drive system driven by the generated motor torque command signal (Tm);
posture command correction angle calculation means (119) for calculating posture command correction angle (θadj) from the variation in the rotation angle (θt); and
manipulation means (10) for inputting a posture command angle (θREFpitch0); **characterized by**:

a select switch (120) for selecting a standstill mode;
wherein the control means (100) calculates the motor torque in accordance with the posture command angle (θREFpitch0) and the posture command correction angle (θadj) and, when the select switch (120) is turned on and the standstill mode is thereby selected, the control means (100) carries out control to add (103) the posture command correction angle (θadj) to the posture command angle (θREFpitch0) whereas, when the select switch (120) is turned off and the standstill mode is thereby not selected, the control means (100) sets the posture command correction angle (θadj) to zero.

2. The traveling apparatus according to Claim 1, wherein the control means (100) is configured to carry out control such that the motor torque is balanced with the rotation torque of the wheels by adding the posture command correction angle (θadj) to the posture command angle (θREFpitch0).

3. A method of controlling a traveling apparatus that travels while controlling the driving of wheels of the traveling apparatus comprising:

generating a motor torque command signal by calculating motor torque in accordance with a supplied rotation command;
detecting variation in the rotation angle of a wheel drive system driven by the generated motor torque command signal; and
calculating motor torque in accordance with a posture command angle (θREFpitch0) inputted from manipulation means and a posture command correction angle (θadj) calculated from the variation in the rotation angle; **characterized by**:

providing a select switch for selecting a standstill mode; and
carrying out control such that, when the standstill mode is selected, the posture command correction angle (θadj) is added to the posture command angle (θREFpitch0) whereas, when the standstill mode is not selected, the posture command correction angle (θadj) is set to zero.

4. The method of controlling a traveling apparatus according to Claim 3, wherein control is carried out such that the motor torque is balanced with the rotation torque of the wheels by adding the posture command correction angle (θadj) to the posture command angle (θREFpitch0).

**Patentansprüche**

1. Fahrbare Vorrichtung zum Fahren bei gleichzeitiger Steuerung des Antriebs von Rädern der fahrbaren Vorrichtung, aufweisend:

ein Steuermittel (100) zum Erzeugen eines Motordrehmoment-Befehlssignals (Tm) durch Berechnen eines Motordrehmoments, das zum Antreiben der Räder nötig ist;
ein Erfassungsmittel (114) zum Erfassen einer Änderung des Drehwinkels eines Radantriebssystems, das von dem erzeugten Motordrehmoment-Befehlssignal (Tm) angesteuert wird;
ein Haltungsbefehlkorrekturwinkel-Berechungsmittel (119) zum Berechnen eines Haltungsbefehlkorrekturwinkels (θadj) aus der Änderung des Drehwinkels (θt);
und
ein Handhabungsmittel (10) zum Eingeben eines Haltungsbefehlwinkels (θREFpitch0); **gekennzeichnet durch**:

einen Wählschalter (120) zum Auswählen eines Stillstandsmodus;
wobei das Steuermittel (100) das Motordrehmoment gemäß dem Haltungsbefehlwinkel (θREFpitch0) und dem Haltungsbefehlkorrekturwinkel (θadj) berechnet und, wenn der Wählschalter (120) auf EIN gestellt ist und **dadurch** der Stillstandsmodus ausgewählt ist, das Steuermittel (100) eine Steuerung ausführt, um den Haltungsbefehlkorrekturwinkel (θadj) zum Haltungsbefehlwinkel (θREFpitch0) zu addieren (103), wohingegen dann, wenn der Wählschalter (120) auf AUS steht und **dadurch** der Stillstandsmodus nicht ausgewählt ist, das Steuermittel (100) den Haltungsbefehlkorrekturwinkel (θadj) auf null einstellt.

2. Fahrbare Vorrichtung nach Anspruch 1, wobei das Steuermittel (100) dafür ausgelegt ist, eine Steuerung auszuführen, mit der durch Addieren des Haltungsbefehlkorrekturwinkels (θadj) zum Haltungsbefehlwinkel (θREFpitch0) das Motordrehmoment dem Drehmoment der Räder angeglichen wird.

3. Verfahren zum Steuern einer fahrbaren Vorrichtung, die fährt, während gleichzeitig das Antreiben der Räder der fahrbaren Vorrichtung gesteuert wird, umfassend:

Erzeugen eines Motordrehmoment-Befehlssignals durch Berechnen eines Motordrehmoments gemäß einem zugeführten Drehbefehl;

Erfassen einer Änderung des Drehwinkels eines Radantriebssystems, das von dem erzeugten Motordrehmoment-Befehlssignal angesteuert wird; und

Berechnen eines Motordrehmoments gemäß einem Haltungsbefehlwinkel ($\theta$REFpitch0), der von einem Handhabungsmittel eingegeben wird, und einem Haltungsbefehlkorrekturwinkel ($\theta$adj), der aus der Änderung des Drehwinkels berechnet wird; **gekennzeichnet durch**:

die Bereitstellung eines Wählschalters zum Auswählen eines Stillstandsmodus; und

das Ausführen einer Steuerung, mit der, wenn der Stillstandsmodus ausgewählt ist, der Haltungsbefehlkorrekturwinkel ($\theta$adj) zum Haltungsbefehlwinkel ($\theta$REFpitch0) addiert wird, wohingegen dann, wenn der Stillstandsmodus nicht ausgewählt ist, der Haltungsbefehlkorrekturwinkel ($\theta$adj) auf null eingestellt wird.

4. Verfahren zum Steuern einer fahrbaren Vorrichtung nach Anspruch 3, wobei die Steuerung derart ausgeführt wird, dass das Motordrehmoment durch Addieren des Haltungsbefehlkorrekturwinkels ($\theta$adj) zum Haltungsbefehlwinkel ($\theta$REFpitch0) dem Drehmoment der Räder angeglichen wird.

## Revendications

1. Dispositif de déplacement pour se déplacer en commandant l'entraînement des roues du dispositif de déplacement comprenant :

des moyens de commande (100) pour générer un signal de commande de couple moteur (Tm) en calculant un couple moteur nécessaire pour entraîner les roues ;

des moyens de détection (114) pour détecter une variation de l'angle de rotation d'un système d'entraînement de roues entraîné par le signal de commande de couple moteur (Tm) généré ;

des moyens de calcul d'angle de correction de commande de posture (119) pour calculer un angle de correction de commande de posture ($\theta$adj) à partir de la variation de l'angle de rotation ($\theta$t) ; et

des moyens de manipulation (10) pour entrer un angle de commande de posture ($\theta$REFpitch0) ; **caractérisé par** :

un commutateur de sélection (120) pour sélectionner un mode surplace ;

dans lequel les moyens de commande (100) calculent le couple moteur selon l'angle de commande de posture ($\theta$REFpitch0) et l'angle de correction de commande de posture ($\theta$adj) et, quand le commutateur de sélection (120) est allumé et le mode surplace est ainsi sélectionné, les moyens de commande (100) réalisent une commande pour ajouter (103) l'angle de correction de commande de posture ($\theta$adj) à l'angle de commande de posture ($\theta$REFpitch0) alors que, quand le commutateur de sélection (120) est éteint et le mode surplace n'est ainsi pas sélectionné, les moyens de commande (100) règlent l'angle de correction de commande de posture ($\theta$adj) à zéro.

2. Dispositif de déplacement selon la revendication 1, dans lequel les moyens de commande (100) sont configurés pour réaliser une commande de telle manière que le couple moteur est équilibre avec le couple de rotation des roues en ajoutant l'angle de correction de commande de posture ($\theta$adj) à l'angle de commande de posture ($\theta$REFpitch0).

3. Procédé de commande d'un dispositif de déplacement qui avance tout en commandant l'entraînement des roues du dispositif de déplacement comprenant :

de générer un signal de commande de couple moteur en calculant un couple moteur en fonction d'une commande de rotation fournie ;

de détecter une variation de l'angle de rotation d'un système d'entraînement de roues entraîné par le signal de commande de couple moteur généré ; et

de calculer un couple moteur en fonction d'un angle de commande de posture ($\theta$REFpitch0) entré depuis des moyens de manipulation et un angle de correction de commande de posture ($\theta$adj) calculé à partir de la variation de l'angle de rotation ; **caractérisé par** le fait de :

fournir un commutateur de sélection pour sélectionner un mode surplace ; et
réaliser une commande de telle manière que, quand le mode surplace est sélectionné, l'angle de correction de commande de posture ($\theta$adj) est ajouté à l'angle de commande de posture ($\theta$REFpitch0) alors que, quand le mode surplace n'est pas sélectionné, l'angle de correction de commande de posture ($\theta$adj) est réglé à zéro.

4. Procédé de commande d'un dispositif de déplacement selon la revendication 3, dans lequel une commande est réalisée de telle manière que le couple moteur est équilibré avec le couple de rotation des roues en ajoutant l'angle de correction de commande de posture ($\theta$adj) à l'angle de commande de posture ($\theta$REFpitch0).

Fig. 1

EP 2 093 100 B1

Fig. 2

Fig. 3

WEIGHT
L[kg]  TABLE

$\theta$ 0 TABLE ANGLE

CENTER-OF-MASS VECTOR

LOAD TORQUE
$\tau 1 = L \times RO = \tau 1$

TIRE

AXLE TORQUE
$\tau O$

ZMP

FLOOR REACTIVE FORTH

INCLINED ROAD SURFACE

FRICTION FORTH    MOTOR TORQUE FRICTION REACTION FORTH
Ff        Tm

Fig. 4

**18** POWER SWITCH

**19** GRIP PORTION

**16** HANDLE LEVER

**17** BATTERY

DIVIDED TABLE

**15R**

**15L** DIVIDED TABLE

**11R**
WHEEL

**11L**
WHEEL

**12R** MOTOR

**12L** MOTOR

Fig. 5A

10 COAXIAL TWO-WHEEL VEHICLE

16 HANDLE LEVER

CENTER-OF-MASS

17 BATTERY

15L, R DIVIDED TABLE

ROAD SURFACE

11L, R WHEEL

Fig. 5B

STANDSTILL
CONTROL

CONTROL PARAMETER SET
CONTROL GAINS Kp, Ki SET
FROM SYSTEM WEIGHT — S1

S2

STANDSTILL SWITCH
SW = ON

OFF

ON

READ TIRE ROTATION ANGLE
VARIATION
CALCULATE POSTURE COMMAND
CORRECTION ANGLE $\theta$ adj — S4

S5

S6

UPDATE POSTURE COMMAND ANGLE
$\theta_{REFpitch} = \theta_{REFpitch0} + \theta$ adj

POSTURE COMMAND ANGLE DEFAULT VALUE
$\theta_{REFpitch} = \theta_{REFpitch0}$, $\theta$ adj =0

POSTURE CONTROL
CALCULATION — S7

MOTOR TORQUE DRIVE
Tref OUTPUT — S8

POSTURE CHANGE — S9

Fig. 6

**18** POWER SWITCH

**19** GRIP PORTION

**16** HANDLE LEVER

**17** BATTERY

DIVIDED TABLE
**15R**

**15L** DIVIDED TABLE

**11R** WHEEL

**11L** WHEEL

**12R** MOTOR

**12L** MOTOR

**14** POSTURE SENSOR

**13** CONTROL DEVICE

Fig. 7A

18

19

10 COAXIAL TWO-WHEEL VEHICLE

16 HANDLE LEVER

17 BATTERY

15L, R DIVIDED TABLE

14 POSTURE SENSOR

13 CONTROL DEVICE

Fig. 7B

11L, R WHEEL

20 DRIVER

18 POWER SWITCH

19 GRIP PORTION

16 HANDLE LEVER

21 HANDLE LEVER
ROLL AXIS ANGLE DETECTOR

11L WHEEL

11R WHEEL

Fig. 8

Fig. 9

Fig. 10

Fig. 11

**EP 2 093 100 B1**

## REFERENCES CITED IN THE DESCRIPTION

**Patent documents cited in the description**

- JP 2004500271 A
- JP 2004074814 A
- JP 2005117365 A
- EP 1788469 A
- US 20070084662 A
- US 20060260857 A
- EP 1529556 A